# EUROPÄISCHE PATENTSCHRIFT

(11) **EP 1 413 017 B1**
(45) Veröffentlichungstag und Bekanntmachung des Hinweises auf die Patenterteilung: **23.08.2006**
(21) Anmeldenummer: 02791479.5
(22) Anmeldetag: 27.07.2002
(51) Int. Cl.: H01S 3/094, H01S 3/0941

(54) **VORRICHTUNG ZUM OPTISCHEN PUMPEN EINES LASERAKTIVEN FESTKÖRPERS**
DEVICE FOR OPTICALLY PUMPING A LASER-ACTIVE SOLID BODY
DISPOSITIF DE POMPAGE OPTIQUE D'UN CORPS SOLIDE A ACTION LASER

(30) Priorität: 28.07.2001 DE 10137069
(43) Veröffentlichungstag der Anmeldung: 28.04.2004
(73) Patentinhaber: TRUMPF Laser GmbH + Co. KG, 78713 Schramberg (DE); Trumpf Laser Marking Systems AG, 7214 Grüsch (CH)
(72) Erfinder: KUMKAR, Malte, 78713 Schramberg (DE); DONG, Shalei, 7000 Chur (CH); WALLMEROTH, Klaus, 78658 Zimmern (DE); OEHLER, Andreas, CH-7205 Zizers (CH); NATE, Markus, CH-7208 Malans (CH)
(74) Vertreter: Kohler Schmid Möbus
(86) Internationale Anmeldenummer: PCT/EP2002/008409
(87) Internationale Veröffentlichungsnummer: WO 2003/012935

(56) Entgegenhaltungen:
- WO-A-93/23899
- DE-A- 2 844 129
- DE-U- 29 621 859
- FR-A- 2 356 296
- US-A- 5 359 616

## Beschreibung

Die Erfindung betrifft eine Vorrichtung zum optischen Pumpen eines stab- oder slabförmigen, laseraktiven Festkörpers mittels Pumplichts, das stirnseitig in den Festkörper eingekoppelt und darin durch Reflexion verteilt wird.

Eine derartige optische Pumpvorrichtung ist beispielsweise durch die WO 93 23899 A bekannt geworden.

WO 93 23899 A offenbart eine Vorrichtung zum optischen Pumpen eines Laserstabs, über dessen Stirnfläche das Pumplicht eingekoppelt wird. Durch Totalreflexion an der Mantelfläche des Laserstabs wird der Weg des Pumplichts im Laserstab verlängert, um so die Absorptionseffizienz zu erhöhen. Weitere Verlängerung des Pumplichtwegs wird durch eine reflektierende Beschichtung auf der Mantelfläche und/oder durch Aufrauen der Mantelfläche erreicht. Dies bewirkt eine homogenere Verteilung des Pumplichts im Laserstab. Allerdings wird trotz aufgerauter und verspiegelter Oberfläche des Laserstabs keine vollständig homogene Verteilung des Pumplichts erreicht, sondern es können sich trotzdem Knotenpunkte erhöhter Pumplichtabsorption und damit heiße Stellen im Laserstab bilden.

Weiterhin ist aus DE 28 44 129 A eine Laserfaser bekannt, die aus einem Kern aus laseraktivem Material und einem Mantel aus nicht-laseraktivem Material besteht. Um Pumplicht einfacher in den dünnen Faserkern einkoppeln zu können, wird die Grenzfläche zwischen dem Mantel und einer mechanisch stabilisierenden Hülle spiegelnd ausgebildet, so dass Pumplicht, das in den Mantel eingekoppelt wird, auch in den Kern gelangt.

Schließlich offenbart US-A-5 359 616 ein konventionelles transversales Pumpkonzept für einen Laserstab mit einer Lampe als Pumplichtquelle. Lampe und Laserstab sind bei einem solchen Pumpkonzept üblicher- und notwendigerweise gemeinsam von einem elliptischen Reflektor umgeben, da das Licht der Lampe nicht auf den Laserstab gerichtet ist, sondern in alle Richtungen abstrahlt. Um das Licht der Lampe in den Laserstab einzukoppeln, befinden sich die Lampe und der Laserstab in den beiden Fokuspunkten der Ellipse. Pumplicht, das an der Mantelfläche des Laserstabs gestreut wird und dadurch eine veränderte Ausbreitungsrichtung erhält, so dass es nicht mehr in die Fokuspunkte der Ellipse gelangt, wird an der diffus reflektierenden Reflektoroberfläche diffus reflektiert und dadurch zumindest teilweise wieder auf den Laserstab gerichtet.

Es ist daher die Aufgabe der Erfindung, bei einer optischen Pumpanordnung der eingangs genannten Art eine verbesserte (homogenere) Verteilung des Pumplichts im Festkörper zu erreichen.

Diese Aufgabe wird erfindungsgemäß dadurch gelöst, dass der Festkörper von einem Reflektor unter Ausbildung eines Ringspaltes umgeben ist und dass durch die Mantelfläche des Festkörpers austretendes Pumplicht an der Mantelfläche und/oder am Reflektor diffus verteilt wird.

Durch die diffuse Verteilung des Pumplichts und die daraus resultierende homogene Ausleuchtung des Festkörpers entstehen keine lokalen Überhöhungen der Leistungsdichte des Pumplichts, wodurch sich im Festkörper eine geringere thermische Störung ausbildet. Dies führt dazu, dass der optische Resonator in geringerem Maße verstimmt wird und somit erst bei höherer Pumpleistung instabil wird. Verglichen mit der bekannten Pumpanordnung ermöglicht die Erfindung dadurch eine höhere Pumpleistung, was zu einer größeren möglichen Leistungsextraktion führt. Weiterhin sind bei gleicher Laserleistung eine geringere Länge des Festkörpers, eine höhere Dotierung im Festkörper und eine bessere Laserstrahlqualität möglich. Der zwischen Festkörper und Reflektor vorgesehene Ringspalt kann vorteilhaft zur Kühlung des Festkörpers von Kühlmedium durchströmt werden.

Bei bevorzugten Ausführungsformen der Erfindung weist die Mantelfläche eine hindurchtretendes Pumplicht diffus verteilende Oberflächenbeschaffenheit auf, die die Totalreflexion des eingekoppelten Pumplichts verhindert und das Pumplicht räumlich homogenisiert. Aufgrund dieser Oberflächenbeschaffenheit der Mantelfläche wird auch die Ausbildung von ASE (amplified stimulated emission) und parasitären Moden wirksam unterdrückt. Beispielsweise ist die Mantelfläche teilweise oder vollständig derart aufgeraut (z.B. mattiert) oder strukturiert, dass mindestens 3%, bevorzugt mindestens 20%, besonders bevorzugt mindestens 40% des stirnseitig eingekoppelten Pumplichts durch die Mantelfläche nach außen austreten.

Insbesondere bei Ausführungsformen, bei denen das Pumplicht an der Mantelfläche nicht ausreichend diffus verteilt wird, ist der Reflektor diffus reflektierend ausgebildet.

Bei Ausführungsformen, bei denen das Pumplicht durch die Mantelfläche bereits ausreichend diffus verteilt wird, reicht ein Reflektor, der das ausgetretene Pumplicht spiegelnd reflektiert, d.h. nicht diffus verteilt.

Bei einer weiteren bevorzugten Ausführungsform der Erfindung ist an der Mantelfläche außen ein Medium mit einem höheren Brechungsindex als der Festkörper vorgesehen, wodurch die innenseitige Totalreflexion des eingekoppelten Pumplichts an der Mantelfläche verhindert wird. Beispielsweise ist das Medium an der Mantelfläche als Schicht vorgesehen oder der Ringspalt zwischen Mantelfläche und Reflektor mit dem Medium ausgefüllt.

Vorzugsweise wird bei der erfindungsgemäßen optischen Pumpanordnung mindestens 3%, bevorzugt mindestens 20%, besonders bevorzugt mindestens 40% des stirnseitig eingekoppelten Pumplichts im Festkörper diffus verteilt.

Die erfindungsgemäße optische Pumpanordnung kann sowohl für den Betrieb eines Laseroszillators als auch als Nachverstärkeranordnung genutzt werden.

Als laserfähige Festkörper können z.B. Laserkristalle aus quasihomogen dotiertem Volumenmaterial, Composite-Kristalle mit Segmenten unterschiedlicher Dotierung, gradiendotierte Kristalle sowie gradientendotiert-gesinterte, polykristalline Laserkeramiken verwendet werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform der erfindungsgemäßen optischen Pumpvorrichtung mit mattierter Mantelfläche des laseraktiven Festkörpers und mit diffus reflektierendem Reflektor;
- Fig. 2: eine zweite Ausführungsform der erfindungsgemäßen optischen Pumpvorrichtung mit mattierter Mantelfläche des laseraktiven Festkörpers und mit spiegelnd reflektierendem, d.h. nicht diffus verteilendem Reflektor;
- Fig. 3: eine dritte Ausführungsform der erfindungsgemäßen optischen Pumpvorrichtung mit einer auf der polierten Mantelfläche des laseraktiven Festkörpers vorgesehenen Schicht mit höherem Brechungsindex als der Festkörper und mit diffus reflektierendem Reflektor; und
- Fig. 4: eine vierte Ausführungsform der erfindungsgemäßen optischen Pumpvorrichtung mit einer Reflexionsschicht auf der mattierten Mantelfläche des laseraktiven Festkörpers.

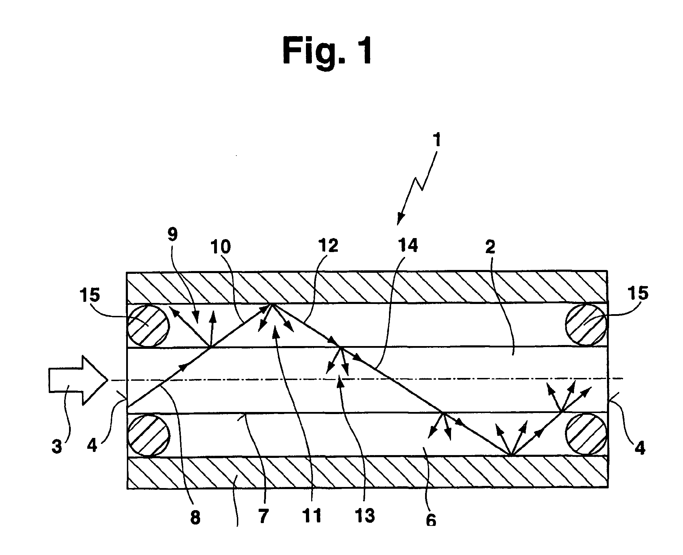

Die in Fig. 1 gezeigte Vorrichtung 1 dient zum optischen Pumpen eines stabförmigen, laseraktiven Festkörpers 2, z.B. eines Nd:YAG-Kristalls. Dazu wird fokussiertes Pumplicht 3 einer oder mehrerer Laserdioden in den Festkörper 2 über eine oder beide Stirnflächen 4 eingekoppelt. Vorzugsweise wird das Pumplicht 3 dabei durch die Stirnfläche(n) 4 in einen undotierten Endbereich des Festkörpers 2 fokussiert. Der Festkörper 2 ist von einem diffus reflektierenden Reflektor 5 unter Ausbildung eines Ringraums oder Ringspalts 6 umgeben. Die Mantelfläche 7 des Festkörpers 2 ist mattiert bzw. aufgeraut, so dass an der Mantelfläche 7 keine Totalreflexion des eingekoppelten Pumplichts stattfindet und auf die Mantelfläche 7 auftreffende Lichtstrahlen 8 des eingekoppelten Pumplichts jeweils als diffuses Licht 9 in den Ringspalt 6 austreten. Die Lichtstrahlen 10 des diffusen Lichts 9 werden am Reflektor 5 jeweils als diffuses Licht 11 auf die Mantelfläche 7 zurückgeworfen. Die Lichtstrahlen 12 des diffusen Lichts 11 treten durch die mattierte Mantelfläche 7 jeweils als diffuses Licht 13 wieder in den Festkörper 2 ein. Die beschriebene Strahlführung wiederholt sich für die Lichtstrahlen 14 des eingekoppelten diffusen Lichts 13, bis sie im Festkörper 2 weitgehend absorbiert sind. Durch die diffuse Verteilung des Pumplichts im Festkörper 2 ist das Pumplicht im Festkörper homogen verteilt, und es entstehen keine lokalen Überhöhungen der Leistungsdichte des Pumplichts, wodurch sich im Festkörper 2 eine geringere thermische Störung ausbildet.

Der Ringspalt 6 ist endseitig über Ringdichtungen 15 nach außen abgedichtet und wird zur Kühlung des Festkörpers 2 von Kühlflüssigkeit durchströmt. An den mit den Ringdichtungen 15 zusammenwirkenden Enden ist die Mantelfläche 7 für eine bessere Dichtwirkung poliert.

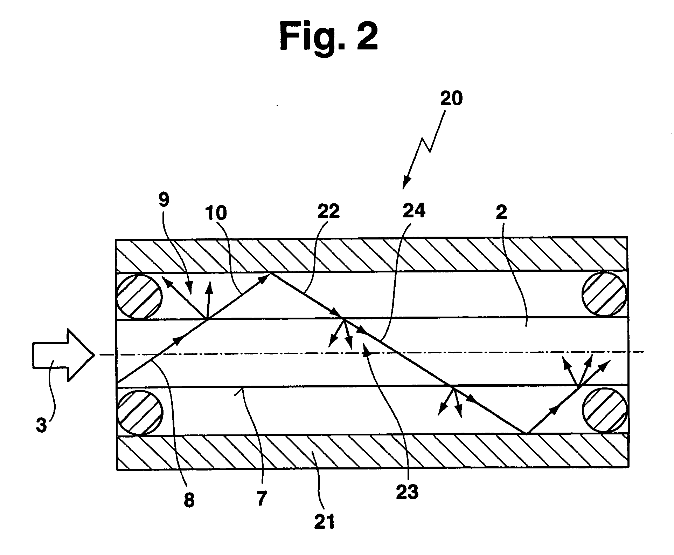

Von der optischen Pumpvorrichtung 1 unterscheidet sich die in Fig. 2 gezeigte optische Pumpvorrichtung 20 durch einen auftreffendes Licht spiegelnd reflektieren Reflektor 21. Die Lichtstrahlen 10 des aus der mattierten Mantelfläche 7 austretenden diffusen Lichts 9 werden am Reflektor 21 jeweils als Lichtstrahlen 22 spiegelnd reflektiert und durch die mattierte Mantelfläche 7 jeweils als diffuses Licht 23 in den Festkörper 2 eingekoppelt. Die beschriebene Strahlführung wiederholt sich für die Lichtstrahlen 24 des eingekoppelten diffusen Lichts 23, bis sie im Festkörper 2 weitgehend absorbiert sind.

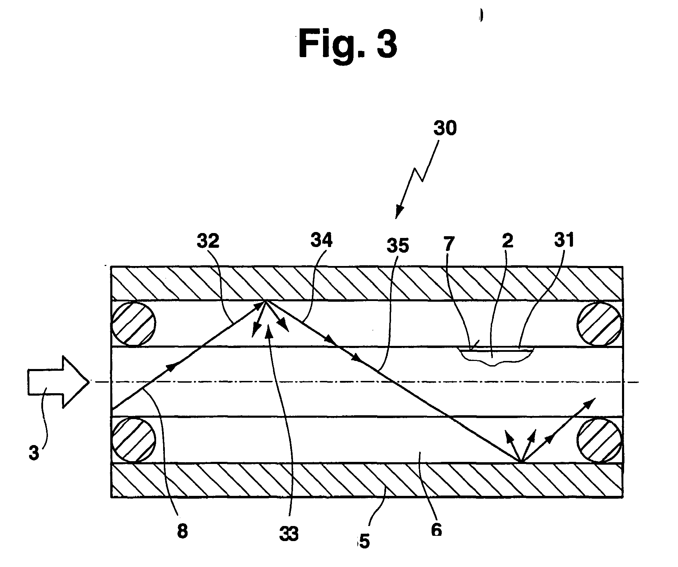

Von der optischen Pumpvorrichtung 1 unterscheidet sich die in Fig. 3 gezeigte optische Pumpvorrichtung 30 dadurch, dass außen auf der zwar totalreflektierend ausgebildeten, polierten Mantelfläche 7 des Festkörpers 2 eine die Totalreflexion verhindernde Schicht 31 mit höherem Brechungsindex als der Festkörper 2 angebracht ist. Daher treten auf die Mantelfläche 7 innenseitig auftreffende Lichtstrahlen 8 des eingekoppelten Pumplichts durch die polierte Mantelfläche 7 und die Schicht 31 in den Ringspalt 6 jeweils als Lichtstrahlen 32 aus, die dann am diffus reflektierenden Reflektor 5 jeweils als diffuses Licht 33 auf die Mantelfläche 7 zurückgeworfen werden. Die Lichtstrahlen 34 des diffusen Lichts 33 treten durch die Schicht 31 und die Mantelfläche 7 jeweils als Lichtstrahlen 35 wieder in den Festkörper 2 ein. Die beschriebene Strahlführung wiederholt sich für die Lichtstrahlen 35, bis sie im Festkörper 2 weitgehend absorbiert sind.

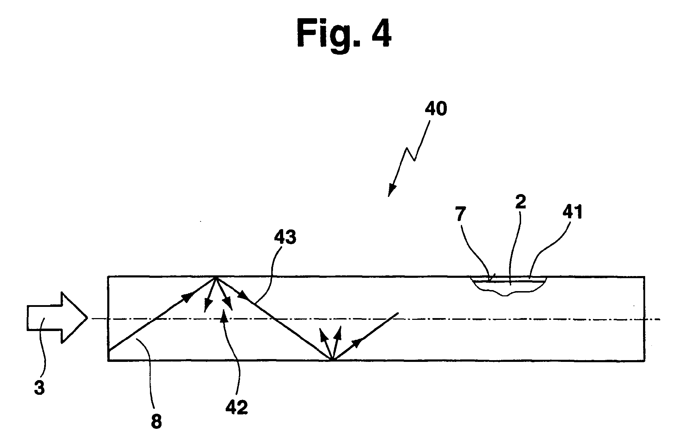

Bei der in Fig. 4 gezeigten optischen Pumpvorrichtung 40 ist die mattierte bzw. aufgeraute Mantelfläche 7 des Festkörpers 2 mit einer Reflexionsschicht 41 versehen. Auf die Mantelfläche 7 auftreffende Lichtstrahlen 8 des eingekoppelten Pumplichts werden an der mattierten Mantelfläche 7 diffus verteilt und als diffuses Licht 42 von der Reflexionsschicht 41 zurück in den Festkörper 2 reflektiert. Die beschriebene Strahlführung wiederholt sich für die Lichtstrahlen 43 des diffusen Lichts 42, bis sie im Festkörper 2 weitgehend absorbiert sind.

## Patentansprüche

1. Vorrichtung (1; 20; 30) zum optischen Pumpen eines stab- oder slabförmigen, laseraktiven Festkörpers (2) mittels Pumplichts (3), das stirnseitig in den Festkörper (2) eingekoppelt und darin durch Reflexion verteilt wird,
**dadurch gekennzeichnet,**
**dass** der Festkörper (2) von einem Reflektor (5; 21) unter Ausbildung eines Ringspaltes (6) umgeben ist und dass durch die Mantelfläche (7) des Festkörpers (2) austretendes Pumplicht (10; 32) an der Mantelfläche (7) und/oder am Reflektor (5) diffus verteilt wird.

2. Vorrichtung nach Anspruch 1, **dadurch gekennzeichnet, dass** die Mantelfläche (7) eine hindurchtretendes Pumplicht (8) diffus verteilende Oberflächenbeschaffenheit aufweist.

3. Vorrichtung nach Anspruch 1 oder 2, **dadurch gekennzeichnet, dass** der Reflektor (5) das ausgetretene Pumplicht (10) diffus reflektiert.

4. Vorrichtung nach Anspruch 1 oder 2, **dadurch gekennzeichnet, dass** der Reflektor (21) das ausgetretene Pumplicht (10) spiegelnd reflektiert.

5. Vorrichtung nach Anspruch 1, **dadurch gekennzeichnet, dass** an der Mantelfläche (7) außen ein Medium mit einem höheren Brechungsindex als der Festkörper (2) vorgesehen ist.

6. Vorrichtung nach Anspruch 5, **dadurch gekennzeichnet, dass** das Medium außen an der Mantelfläche (7) als Schicht (31) vorgesehen ist.

7. Vorrichtung nach Anspruch 5 oder 6, **dadurch gekennzeichnet, dass** der Reflektor (5) ausgetretenes Pumplicht (10) diffus reflektiert.

8. Vorrichtung nach einem der vorhergehenden Ansprüche, **dadurch gekennzeichnet, dass** der Ringspalt (6) von einem Kühlmedium, insbesondere Wasser, durchströmt ist.

9. Vorrichtung nach einem der vorhergehenden Ansprüche, **dadurch gekennzeichnet, dass** mindestens 3%, bevorzugt mindestens 20%, besonders bevorzugt mindestens 40% des stirnseitig eingekoppelten Pumplichts (8) im Festkörper (2) diffus verteilt wird.

## Claims

1. Apparatus (1; 20; 30) for optically pumping a rod- or slab-shaped, laser-active solid body (2) by means of pumping light (3) which is coupled into the solid body (2) at an end face and distributed therein by reflection,
**characterised in**
**that** the solid body (2) is surrounded by a reflector (5; 21), forming an annular gap (6), and that pumping light (10; 32) exiting through the circumferential surface (7) of the solid body (2) is diffusely distributed at the circumferential surface (7) and/or at the reflector (5).

2. Apparatus according to Claim 1, **characterised in that** the circumferential surface (7) has a surface quality which diffusely distributes pumping light (8) passing through.

3. Apparatus according to Claim 1 or 2, **characterised in that** the reflector (5) diffusely reflects the pumping light (10) having emerged.

4. Apparatus according to Claim 1 or 2, **characterised in that** the reflector (21) specularly reflects the pumping light (10) having emerged.

5. Apparatus according to Claim 1, **characterised in that** a medium with a higher refractive index than the solid body (2) is provided externally at the circumferential surface (7).

6. Apparatus according to Claim 5, **characterised in that** the medium is provided externally at the circumferential surface (7) as a layer (31).

7. Apparatus according to Claim 5 or 6, **characterised in that** the reflector (5) diffusely reflects pumping light (10) having emerged.

8. Apparatus according to any one of the preceding Claims, **characterised in that** a cooling medium, in particular water, flows through the annular gap (6).

9. Apparatus according to any one of the preceding Claims, **characterised in that** at least 3%, preferably at least 20%, particularly preferably at least 40% of the pumping light (8) coupled in at the end face is diffusely distributed in the sold body (2).

## Revendications

1. Dispositif (1 ; 20 ; 30) pour le pompage optique d'un solide à action laser ou laser-actif (2) en forme de barreau ou de plaque au moyen d'une lumière de pompage (3) qui est couplée frontalement dans le solide (2) et répartie dans celui-ci par réflexion,
**caractérisé par le fait**
**que** le solide (2) est entouré par un réflecteur (5 ; 21) avec formation d'une fente annulaire (6) et que la lumière de pompage (10 ; 32) émergeant à travers la surface périphérique (7) du solide (2) est répartie de manière diffuse à la surface périphérique (7) et/ou sur le réflecteur (5).

2. Dispositif selon la revendication 1, **caractérisé par le fait que** la surface périphérique (7) présente une qualité de surface qui répartit de manière diffuse une lumière de pompage (8) qui la traverse.

3. Dispositif selon la revendication 1 ou 2, **caractérisé par le fait que** le réflecteur (5) réfléchit de manière diffuse la lumière de pompage (10) émergente.

4. Dispositif selon la revendication 1 ou 2, **caractérisé par le fait que** le réflecteur (21) réfléchit à la manière d'un miroir la lumière de pompage (10) émergente.

5. Dispositif selon la revendication 1, **caractérisé par le fait qu'**il est prévu à la surface périphérique (7) extérieure un agent d'indice de réfraction plus élevé que celui du solide (2).

6. Dispositif selon la revendication 5, **caractérisé par le fait que** l'agent à la surface périphérique (7) extérieure est prévu sous forme de couche (31).

7. Dispositif selon la revendication 5 ou 6, **caractérisé par le fait que** le réflecteur (5) réfléchit de manière diffuse la lumière de pompage (10) émergente.

8. Dispositif selon l'une des revendications précédentes, **caractérisé par le fait que** la fente annulaire (6) est traversée par un agent de refroidissement, en particulier de l'eau.

9. Dispositif selon l'une des revendications précédentes, **caractérisé par le fait qu'**au moins 3 %, préférentiellement 20 %, particulièrement préférentiellement au moins 40 % de la lumière de pompage (8) couplée frontalement dans le solide (2) est répartie de manière diffuse.
